Europäisches Patentamt

European Patent Office

Office européen des brevets

(11) Publication number : **0 546 816 A1**

# (12) EUROPEAN PATENT APPLICATION

(21) Application number : 92311226.2

(51) Int. Cl.⁵ : **D21H 19/60**

(22) Date of filing : 09.12.92

(30) Priority : **11.12.91 EP 91311509**

(43) Date of publication of application :
**16.06.93 Bulletin 93/24**

(84) Designated Contracting States :
**AT BE CH DE DK ES FR GB GR IE IT LI NL PT SE**

(71) Applicant : **VINAMUL LTD.**
**Mill Lane**
**Carshalton, Surrey SM5 2JU (GB)**

(72) Inventor : **Eichhorn, Herbert**
**Marijkestraat 12**
**NL-6191 AR Beek (NL)**

(74) Representative : **Hugot, Alain et al**
**Unilever plc, Patent Division, Colworth House**
**Sharnbrook, Bedford MK44 1LQ (GB)**

(54) **Surface treatment.**

(57)    The embossing of surfaces, eg book covers, typically involves the use of a plastisol based on poly vinyl chloride. These plastisols can release vinyl chloride or plasticiser when heated to embossing temperatures. The present invention uses a vinyl acetate/ethylene based copolymer emulsion in the form of a paste to prepare an embossable surface.

EP 0 546 816 A1

Jouve, 18, rue Saint-Denis, 75001 PARIS

FIELD OF THE INVENTION:

This invention relates to the use of polymer emulsions as a material to treat the surfaces of articles, in particular book covers, to allow them to be embossed. Embossing a surface comprises placing a layer of deformable material on the paper surface and then applying pressure and, optionally, heat to selected areas of the material. This pressure depresses the selected areas to give a pleasing appearance, for example a leather finish, or information such as a title. Thus an embossing stage is generally desirable to give aesthetic or informative characteristics to the surface. The impression obtained is required to be stable over the period during which the embossed surface will be subjected to wear from physical handling and other deleterious actions.

BACKGROUND TO THE INVENTION:

Typically, plastisols based on polyvinylchloride (PVC) are used in this process. A PVC plastisol consists of PVC solubilised in a plasticiser, e.g. diiso octyl phthalate; this material is then coated onto a base paper and subjected to embossing. These plastisols are well characterised in the literature, e.g. Kirk-Othmer vol 21 (2nd Ed) pages 403/4. There is a general concern related to the industrial use of PVC and precautions are taken in industrial processes, e.g. embossing, when high temperatures are used. When subjected to such temperatures, for example up to 200°C, these systems can release vinyl chloride or plasticiser. Additionally a product containing PVC plastisol will release these undesirable materials and dioxin when incinerated as waste.

GENERAL DESCRIPTION OF THE INVENTION

The invention proposes the use of a polymer emulsion based on a vinyl acetate/ethylene copolymer emulsion as a surface treatment material suitable for embossing when prepared as a coating composition in the form of a paste. Thus the present invention allows a plastisol to be replaced with a water borne system.

This coating composition comprises:

i) a copolymer emulsion having a solids content of about 50% to about 70% by wt, with the polymer solids comprising from about 50% to about 90% of vinyl C1 to C4 alkanoate and from about 5% to about 30% by wt of C2 to C4 alkylene,

ii) optionally filler, pigment, antifoam and dispersent, and

iii) a viscosity in the range from about 5000 to about 15000m Pas.

The preferred alkanoate is vinyl acetate and the preferred alkylene is ethylene. The deposited layer of composition is required to have a degree of thermoplasticity to allow the layer to flow during embossing and then retain the embossed pattern on cooling.

Although vinyl acetate is the preferred vinyl alkanoate monomer because of its availability, cost and know reactivity, other vinyl esters within the class defined are usable, in particular vinyl formate, propionate, butyrate and isobutyrate. Ethylenic hydrocarbons other than ethylene may be used, for example propylene, butylene and isobutene.

The copolymer may, optionally, contain a third monomer. Examples of these monomers are vinyl esters of versatic acids obtainable from Shell Chemicals of Chester England under the Trade Mark "Veova", unsaturated carboxylic acids, eg crotonic acid, itaconic acid, acrylic acid, methacrylic acid and maleic acid, alkyl acrylates, eg butyl acrylate, and sodium vinyl sulphonate. These third monomers will be present whent he vinyl alkanoate component is used at the lower end of its 50% to 90% by weight range, but may also be present at higher levels.

Methods for preparing the copolymer emulsions of the invention are well characterised in the literature. Polymer Synthesis (vols I and III) by Sandler & Karo (Academic Press 1974) and Preparative Methods of Polymer Chemistry (2nd Ed) by Sorenson and Campbell (Interscience 1968) provide preparative information. Methoden der Organischen Chemie (Houben-Wey) Band XIV published by George Thieme Verlag Stuttgart (1961) also provides preparative descriptions.

The invention also relates to a method of treating a surface wherein the surface is contacted with a layer of coating composition having a thickness of about 0.1mm to about 0.3mm, the emulsion having a copolymer solids content of about 50% to about 70% by wt and a viscosity in the range from about 5000 to about 15000m Pas and containing from about 50% to about 90% vinyl C1 to C4 alkanoate and from about 5% to about 30% by wt C2 to C4 alkylene, the layer then being subjected to pressure to provide a surface having embossed areas. The standard equipment for embossing can be used with these copolymer emulsions.

Preferably the coating composition contains (by weight):

from 0% to 10% filler,

from 0% to 10% pigment,

from 0% to 0.4% antifoam, and
from 0% to 0.2% dispersant

Thus it is possible, but not usual, to use a copolymer emulsion alone as the coating composition.

Examples of the fillers are quartz powder, kaolin, silica and milled minerals; the pigments include titanium dioxide, zinc oxide and zinc sulphide.

A specifically advantageous feature is the addition of a polymer powder to the emulsion in order to provide an emulsion with the appropriate solids content. Usually this powder will have been obtained by spray drying, but it is not essential for it to have been obtained from an emulsion identical to that used as the base. That is, the powder may have different contents of the vinyl alkanoate and alkylene compared with the emulsion.

SPECIFIC DESCRIPTION OF THE INVENTION

A sheet of paper intended for being cut and formed into covers for diaries was laid flat on a supporting surface. A copolymer emulsion comprising 76% by wt vinyl acetate, 18% by wt ethylene and having a solids content of 50% and Tg of 0°C was used as base for an embossable coating composition; this emulsion is obtainable from Vinamul Ltd of Carshalton England under the reference Vinamul 32871.

The composition comprised:

| Component | Parts by weight |
|---|---|
| Vinapol 1080[*] | 60 |
| Water | 30 |
| Vinamul 32871 | 100 |
| Dispersant[**] | 2 |
| Antifoamer[***] | 0.4 |
| Filler (calcium carbonate) | 6 |
| Pigment (titanium dioxide) | 20.6 |

[*]   A spray dried copolymer powder containing 82% vinyl acetate and 18% ethylene.

[**]   Calgon N (10% soln).

[***]   Nopco NXZ.

This composition, after mixing, had a copolymer solids content of 58% and a viscosity of 7000m Pas. The copolymer solids content is required to be in the range 50% to 70% to ensure a reduced water content and, consequently, no reduction in paper strength during processing. The low water content also ensures blistering does not occur during drying.

The above composition was then coated onto the paper surface at ambient conditions at a level of 200g (dry)/m² with the aid of a knife coater. After drying in a laboratory oven for 5 mins at 115°C the sheet was embossed with a pattern effect using two laboratory methods.

In the first method the coated paper and embossing stamp (comprising a 60 mesh metal screen and preheated to 170°C) were placed together and passed through rollers under a pressure of 4 bar. In the second method the embossing stamp was a preheated (170°C) roller operated at 4 bar. The sheet was then cut and formed into diary covers. The embossed pattern had acceptable feel and appearance. Optionally a top coat of, e.g. an acrylic polymer, can be applied to provide improved water resistance and blocking resistance. Normally this would be applied to the dried composition before the embossing step.

**Claims**

1.  A method of preparing an embossed surface wherein:
    i) a surface is coated with a layer, 0.1mm to 0.3mm, of a coating composition having a copolymer solids content of about 50% to about 70% by weight and a viscosity in the range 5000m Pas to 15000m Pas, the copolymer solids containing about 50% to about 90% vinyl C1 to C4 alkanoate and from about 5% to about 30% by weight C2 to C4 alkylene,
    ii) drying the coating composition, and
    iii) subjecting the coating to an embossing step.

European Patent
Office

**EUROPEAN SEARCH REPORT**

Application Number

EP 92 31 1226

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 154 899 (HERSHEY ET AL.)<br>* the whole document *<br>--- | 1 | D21H19/60 |
| Y | ABSTRACT BULLETIN OF THE INSTITUTE OF PAPER CHEMISTRY.<br>vol. 53, no. 2, August 1982, APPLETON US<br>page 190<br>WOLF<br>* abstract *<br>--- | 1 | |
| Y | 'Pulp and Paper Chemistry and Chemical Technology, Third edition' , JAMES P. CASEY , NEW-YORK<br>* page 2550, paragraph 2 - page 2553 *<br>----- | 1 | |
| | | | **TECHNICAL FIELDS SEARCHED (Int. Cl.5)** |
| | | | D21H |

The present search report has been drawn up for all claims

| Place of search | Date of completion of the search | Examiner |
|---|---|---|
| THE HAGUE | 22 FEBRUARY 1993 | SONGY Odile |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)